Europäisches Patentamt

European Patent Office

Office européen des brevets

(11) Veröffentlichungsnummer: **0 267 561**
**A1**

## (12) EUROPÄISCHE PATENTANMELDUNG

(21) Anmeldenummer: **87116484.4**

(22) Anmeldetag: **07.11.87**

(51) Int. Cl.⁴: **F16D 23/04** , F16D 69/00

(30) Priorität: **14.11.86 DE 3638950**

(43) Veröffentlichungstag der Anmeldung:
**18.05.88 Patentblatt 88/20**

(84) Benannte Vertragsstaaten:
**DE ES FR GB IT SE**

(71) Anmelder: **ZWN ZAHNRADWERK NEUENSTEIN GMBH & CO.**
**Hermann-Hagenmeyer-Strasse**
**D-7113 Neuenstein(DE)**

(72) Erfinder: **Müller, Erich R.**
**Hohe Strasse 15**
**D-7110 Öhringen-Cappel(DE)**
Erfinder: **Hofmeister, Klaus**
**Am Altenberg 4**
**D-7110 Öhringen-Michelbach(DE)**
Erfinder: **Nachbar, Rolf**
**Im Eselberg 63**
**D-7103 Schwaigern(DE)**

(74) Vertreter: **Witte, Alexander, Dr.-Ing.**
**Schickhardtstrasse 24**
**D-7000 Stuttgart 1(DE)**

(54) **Verfahren zum Herstellen von Synchronisierungskörpern in Stufengetrieben von Kraftfahrzeugen.**

(57) Ein Verfahren dient zum Herstellen von Synchronisierungskörpern (10) in Stufengetrieben von Kraftfahrzeugen, bei dem ein Sinter-Reibbelag (15) auf eine Fläche (12) des Synchronisierungskörpers (10) aufgebracht wird.

Um die Haftung des Sinter-Reibbelages (15) auf dem Synchronisierungskörper (10) zu erhöhen, wird die Fläche vor dem Aufbringen des Sinter-Reibbelags (15) mit Ausformungen versehen, die formschlüssig mit dem Sinter-Reibbelag (15) zusammenwirken. Der Sinter-Reibbelag (15) wird dann unmittelbar auf die mit den Ausformungen versehene Fläche (12) aufgesintert.

Fig.2

## Verfahren zum Herstellen von Synchronisierungskörpern in Stufengetrieben von Kraftfahrzeugen

Die Erfindung betrifft ein Verfahren zum Herstellen von Synchronisierungskörpern in Stufengetrieben von Kraftfahrzeugen, bei dem ein Sinter-Reibbelag auf eine Fläche des Synchronisierungskörpers aufgebracht wird.

Ein Verfahren der vorstehend genannten Art ist aus der DE-PS 34 17 813 bekannt.

Bei dem bekannten Verfahren wird ein körniges, sinterbares Reibmaterial auf ein ebenes Trägerblech aufgestreut und mit dem Trägerblech in einem Ofen gesintert. Das ebene Trägerblech wird alsdann verdichtet, in dünne Streifen geschnitten, in Kegelform tiefgezogen und anschließend durch Schweißen auf einer innenkegelförmigen Oberfläche eines metallischen Grundkörpers eines Synchronringes dauerhaft befestigt.

Es hat sich jedoch gezeigt, daß die nach dem bekannten Verfahren hergestellten Synchronringe bei hoher Belastung des Synchronrings gelegentlich keine ausreichenden Eigenschaften haben, insbesondere hinsichtlich der Haftung des Reibbelages am Trägerblech. So kann es unter bestimmten Betriebsbedingungen vorkommen, daß sich der Reibbelag gesamthaft vom Trägerblech löst und die Funktion des Getriebes auf diese Weise beeinträchtigt wird.

Aus der DE-OS 27 44 994 ist ein Synchronisierring bekannt, bei dem ein Reibbelag aus einem auf organischer Grundlage gebildeten Reibmaterial besteht, der mit einem vorgefertigten Ringkörper durch Kleben verbunden ist. Der Ringkörper kann dabei mit Vertiefungen in Gestalt axial verlaufender Rillen versehen sein, in die der Reibbelag beim Heißkleben eingepreßt wird.

Ein Nachteil dieses bekannten Synchronisierrings ist, daß zum Ausfüllen der Rillen eine erhebliche Einpreßkraft beim Einbringen des Reibbelages aufgewendet werden muß. Der Reibbelag besteht nämlich aus einem kunstharzgetränkten Material auf Papierbasis, d.h. einem relativ weichen Material, das beim Einpressen in die Rillen eingedrückt wird. Infolge des erheblichen Einpreßdrucks ist jedoch kaum eine hohe Maßhaltigkeit zu gewährleisten, die bei Synchronisierringen hoher Qualität unabdingbar ist. Synchronisierringe dieser Qualitätsstufe, wie sie beispielsweise auch durch die eingangs genannte DE-PS 34 17 813 beschrieben werden, werden überlicherweise "kalibriert", d.h. der Reibbelag wird mit definiertem Druck so beaufschlagt und dadurch verdichtet, daß sich ein gewünschtes Endmaß einstellt. Dies ist offensichtlich bei dem bekannten Synchronisierring der DE-OS 27 44 994 nicht möglich, wiel bereits für das Eindrücken des Reibbelages in die Rillen des Ringkörpers bereits ein erheblicher Mindestdruck aufgebracht werden muß.

Aus der DE-OS 31 22 522 ist eine Synchronisiereinrichtung für formschlüssige Schaltkupplungen bekannt, bei der ein Reibbelag aus nichtmetallischem, anorganischem Werkstoff, nämlich einem Keramikwerkstoff, u.a. auch formschlüssig mit dem Synchronisierring verbunden werden kann. Unter "formschlüssig" wird dabei jedoch die Aufbringung eines konischen Reibbelages auf einer entsprechend konischen Fläche des Synchronisierringes verstanden.

Darüberhinaus ist es aus der Technik der Dichtungen (DE-AS 22 61 803, DE-OS 27 13 096) sowie der Technik der Brems-und Kupplungsbeläge (DE-OS 35 15 512, DE-OS 31 19 126, DE-Gm 71 33 858, DE-Gm 1 752 695, FR-OS 2 232 703, FR-PS 608 876) bekannt, zum Befestigen von vorgefertigten Dichtungskörpern, Kupplungsbelägen oder Bremsbelägen Aussparungen an diesen Elementen Sowie komplementäre Aussparungen an den zugehörigen Tragekörpern vorzusehen, um eine formschlüssige Halterung dieser Elemente zu ermöglichen.

Diese Technik ist jedoch auf das Gebiet der Synchronisierringe nicht überträgbar, weil bei Synchronisierringen die Dicke des jeweiligen Reibelementes nur beispielsweise 1 mm beträgt, so daß die Ausbildung von genuteten, gezahnten oder sonstwie mit Oberflächenrastungen versehenen Reibkörpern nicht möglich ist.

Der Erfindung liegt demgegenüber die Aufgabe zugrunde, ein Element der eingangs genannten Art dahingehend weiterzubilden, daß eine noch größere Sicherheit gegen Ablösen des Reibbelages vom Synchronisierungskörper gegeben ist.

Diese Aufgabe wird erfindungsgemäß dadurch gelöst, daß die Fläche vor dem Aufbringen des Sinter-Reibbelags mit Ausformungen versehen wird, die formschlüssig mit dem Sinter-Reibbelag zusammenwirken, und daß der Sinter-Reibbelag unmittelbar auf die mit den Ausformungen versehene Fläche aufgesintert wird.

Die der Erfindung zugrundeliegende Aufgabe wird auf diese Weise vollkommen gelöst, weil durch den Formschluß des aufgesinterten Sinter-Reibbelages mit dem Grundkörper eine wesentlich bessere Haftung erzielt wird. Beim dem eingangs genannten Verfahren muß nämlich größte Sorgfalt darauf verwendet werden, daß der Sinter-Reibbelag vor dem Sintern auf eine absolut saubere Oberfläche des Trägerblechs aufgestreut wird, weil bereits kleinste Verunreinigungen, insbesondere Ölablagerungen zu drastisch verschlechterten Hafteigenschaften und den bereits geschilderten Problemen führen. Die Erfindung macht es hingegen möglich, geringere Anforderungen an die Produktionsbedingungen zu stellen, weil selbst bei nicht exakt reinen Oberflächen eines Grundkörpers eines Synchronisierungskörpers eine ausreichende Haftung durch Formschluß zwischen den Ausformungen der Oberfläche und dem aufgesinterten Sinter-Reibbelag hergestellt wird.

Gegenüber dem eingangs weiter genannten Verfahren ergibt sich der wesentliche Vorteil, daß der lose aufgesinterte Reibbelag durch anschließendes Pressen kalibriert werden kann, wobei zum Kalibrieren ein großes Intervall an Preßkräften zur Verfügung steht.

Bei einer bevorzugten Ausgestaltung der Erfindung sind die Ausformungen als Vertiefungen, insbesondere Bohrungen in der Fläche ausgebildet.

Diese Maßnahme hat den Vorteil, daß mit einfachen Werkzeugen eine Vorbearbeitung der Oberfläche möglich ist, wobei Lage, Größe und Anzahl der Vertiefungen bzw. Bohrungen auf die jeweiligen Erfordernisse abgestellt werden könne.

Bei einer weiteren Ausführungsform der Erfindung sind die Ausformungen als Rippen auf bzw. in der Fläche ausgebildet.

Diese Maßnahme hat den Vorteil, daß die Ausformungen ebenfalls sehr einfach hergestellt werden können, außerdem kann durch das Vorsehen von Rippen die Formstabilität, d.h. die Tragfähigkeit des reibschlüssigen Elements erhöht werden, weil bekanntlich eine gerippte Oberfläche eine höhere mechanische Formstabilität aufweist als eine glatte Oberfläche eines Körpers.

Bei einer weiteren Ausgestaltung der Erfindung sind die Ausformungen als flächige Verzahnung ausgebildet.

Auch diese Maßnahme hat den Vorteil, daß die Ausformungen durch Prägen oder Walzen oder dergleichen leicht aufgebracht werden können und durch die Verzahnung ist eine besonders effektive formschlüssige Haftung des Sinter-Reibbelages sichergestellt.

Bei einer weiteren Ausführungsform der Erfindung sind die Ausformungen als Erhöhungen am Rand des Sinter-Reibbelages ausgebildet.

Diese Maßnahme hat den Vorteil, daß ein Abschälen oder Herauslösen des Sinter-Reibbelages besonders effektiv verhindert wird, weil die Erhöhung am Rand als Sperre für ein seitliches Herausrutschen des Reibbelages wirkt. Außerdem wird die mechanische Stabilität im Randbereich erhöht, weil ein Herauslösen von Elementen des Reibbelages durch den an dieser Stelle vorgesehenen Rand verhindert wird.

Schließlich sind bei einer weiteren Ausführungsform des erfindungsgemäßen Verfahrens die Ausformungen bei einem kegelförmigen Sinter-Reibbelag als axiale Rillen ausgebildet.

Diese Maßnahme hat den Vorteil, daß durch die axiale Orientierung der Rillen ein besonders guter Formschluß hergestellt wird, weil die wesentlich Belastung des kegelförmigen Sinter-Reibbelages in Umfangsrichtung, d.h. senkrecht zu den axialen Rillen wirkt.

Es versteht sich, daß die vorstehend genannten Varianten auch in beliebiger Kombination miteinander verwendet werden können, um die jeweils genannten Vorteile miteinander zu verbinden, die sich teilweise auch gegenseitig ergänzen und unterstützen.

Gemäß dem eingangs genannten reibschlüssigen Element wird die der Erfindung zugrundeliegende Aufgabe dadurch gelöst, daß die Fläche mit Ausformungen versehen ist, die mit entsprechenden Ausformungen des Sinter-Reibbelages formschlüssig zusammenarbeiten.

Die Vorteile dieser Maßnahme wurden bereits weiter oben ausführlich erläutert.

Weitere Vorteile ergeben sich aus der Beschreibung und der beigefügten Zeichnung.

Es versteht sich, daß die vorstehend genannten und die nachstehend noch erläuterten Merkmale nicht nur an der jeweils angegebenen Kombination sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Darstellung im Schnitt eines an sich bekannten Synchronringes, an dem die Erfindung verwirklicht sein kann;

Fig. 2 eine stark schematisierte abgebrochene Schnittdarstellung, in stark vergrößertem Maßstab, eines erfindungsgemäßen Ausführungsbeispiels mit Bohrungen bzw. Vertiefungen in einer Oberfläche;

Fig. 3 eine Darstellung ähnlich Fig. 2 jedoch mit Rippen in der Oberfläche;

Fig. 4 eine Darstellung ähnlich Fig. 2, jedoch mit einer flächigen Verzahnung in der Oberfläche;

Fig. 5 eine Darstellung ähnlich Fig. 2, jedoch mit Erhöhungen am Rand und in der Ebene der Oberfläche;

Fig. 6 eine weitere Darstellung ähnlich Fig. 2 für eine kegelförmige Oberfläche und eine axiale Rille in der Oberfläche.

Die nachstehende Beschreibung von Ausführungsbeispielen der Erfindung orientiert sich am Beispiel von Synchronringen als reibschlüssigen Elementen, es versteht sich jedoch, daß die Erfindung gleichermaßen bei anderen Arten reibschlüssiger Elemente verwendbar ist, wie sie insbesondere in Kraftfahrzeuggetrieben verwendet werden. Es versteht sich ferner, daß die Gestaltung der jeweiligen Reibbeläge ebenfalls nicht einschränkend zu verstehen ist, sondern daß auch andere als kegelförmige Reibbeläge, insbesondere zylindrische oder ebene Reibbeläge, verwendet werden können, ohne den Rahmen der vorliegenden Erfindung zu verlassen. Auch die dargestellten Beispiele mit innenkegelförmiger Oberfläche sind nicht einschränkend zu verstehen, die Erfindung kann selbstverständlich auch bei Synchronringen mit außenkegelförmigen Reibflächen verwendet werden.

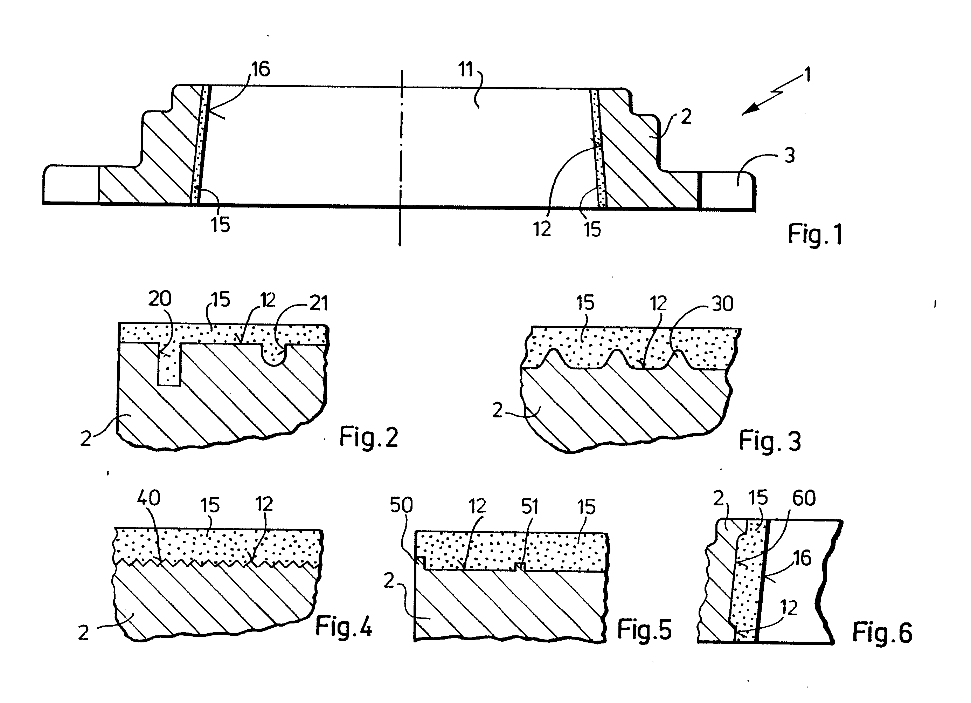

In Fig. 1 ist mit 1 insgesamt ein Synchronring bezeichnet, der im wesentlichen aus einem torusförmigen Metallkörper 2 mit angesetzter Außenverzahnung 3 besteht. Der Synchronring 1 wird von einer kegelförmigen Öffnung 11 durchsetzt, die durch eine erste kegelförmige Innenfläche 12 des Metallkörpers 2 definiert ist. Auf der ersten Innenfläche 12 befindet sich ein Sinter-Reibbelag 15, der nach innen eine zweite, ebenfalls kegelige Innenfläche 16 definiert.

Der Sinter-Reibbelag 15 wird unmittelbar auf den metallischen Grundkörper 2 aufgesintert wird, ohne daß ein Zwischenträger verwendet wird. Dies ist in der parallelen Patentanmeldung 87 116 072.7 derselben Anmelderin im einzelnen beschrieben, deren Offenbarungsinhalt durch diese Bezugnahme zu Offenbarungsinhalt der vorliegenden Anmeldung gemacht wird.

In Fig. 2 ist in stark vereinfachter und stark vergrößerter Darstellung der metallische Grundkörper 2 zu erkennen. Der Grundkörper 2 ist im Ausführungsbeispiel gemäß Fig. 2 mit Bohrungen 20 oder Vertiefungen 21 versehen. Wird nun der Sinter-Reibbelag 15 auf den so ausgeformten Grundkörper 2 aufgesintert, so gelangt beim Aufstreuen des Sinter-Reibbelags Material in die Bohrungen 20 bzw. die Vertiefungen 21. Nach dem Sintern des Reibbelags 15 entsteht somit ein wirksamer Formschluß zwischen Reibbelag 15 und Grundkörper. Hierzu muß man sich vor Augen führen, daß die Belastung des Sinter-Reibbelages 15 im wesentlichen in einer Richtung parallel zur Oberfläche 12 erfolgt, so daß einem Abscheren des Reibbelages 15 infolge von Reibungskräften durch die Verzahnung des Reibbelages 15 in den Bohrungen 20 bzw. den Vertiefungen 21 wirksam Widerstand entgegengesetzt wird.

Beim Ausführungsbeispiel nach Fig. 3 ist der Grundkörper 2 mit Rippen 30 versehen, die aus der Oberfläche 12 des Grundkörpers 2 herausragen.

Auch in diesem Falle entsteht ein sehr wirksamer Formschluß, wobei zusätzlich die Rippen 30 die Formstabilität, d.h. die Tragfähigkeit der Anordnung erhöhen können.

Beim Ausführungsbeispiel nach Fig. 4 ist die Oberfläche 12 des Grundkörpers 2 mit einer flächigen Verzahnung 40 versehen, die beispielsweise mittels eines geeigneten Prägeelementes, beispielsweise einer entsprechend geprägten Walze aufgebracht werden kann.

Beim Ausführungsbeispiel nach Fig. 5 ist der Grundkörper 2 im Randbereich des Reibbelages 15 mit einer Randerhöhung 50 versehen, wobei zusätzlich noch Erhöhungen 51 in der Ebene der Oberfläche 12 vorgesehen sein können. Die Randerhöhung 50 überdeckt einen Teil der Stirnfläche des Sinter-Reibbelages 15 und sorgt somit zusätzlich für dessen Halterung und für einen Widerstand gegen Herausbröckeln von Sinterteilchen.

Beim Ausführungsbeispiel nach Fig. 6 ist wiederum die kegelförmige Innenfläche 16 des Sinter-Reibbelages 15 zu erkennen. In die kegelförmige Innenfläche 12 des metallischen Grundkörpers 2 ist in diesem Falle eine axiale Rille 60 eingebracht worden, die sich, wie in Fig. 6 dargestellt, nur über einen Teil der axialen Länge des Grundkörpers 2 oder über dessen gesamte Länge erstrecken kann.

**Ansprüche**

1. Verfahren zum Herstellen von Synchronisierungskörpern (10) in Stufengetrieben von Kraftfahrzeugen, bei dem ein Sinter-Reibbelag (15) auf eine Fläche (12) des Synchronisierungskörpers (10) aufgebracht wird, dadurch gekennzeichnet, daß die Fläche (12) vor dem Aufbringen des Sinter-Reibbelags (15) mit Ausformungen versehen wird, die formschlüssig mit dem Sinter-Reibbelag (15) zusammenwirken, und daß Sinter-Reibbelag (15) unmittelbar auf die mit den Ausformungen versehene Fläche (12) aufgesintert wird.

2. Verfahren nach Anspruch 1, dadurch gekennzeichnet, daß die Ausformung als Vertiefungen (21), insbesondere Bohrungen (20) in der Fläche (12) ausgebildet sind.

3. Verfahren nach Anspruch 1 oder 2, dadurch gekennzeichnet, daß die Ausformungen als Rippen (30) auf bzw. in der Fläche (12) ausgebildet sind.

4. Verfahren nach einem der Ansprüche 1 bis 3, dadurch gekennzeichnet, daß die Ausformungen als eine flächige Verzahnung (40) ausgebildet sind.

5. Verfahren nach einem der Ansprüche 1 bis 4, dadurch gekennzeichnet, daß die Ausformungen als Erhöhungen (50) am Rande des Sinter-Reibbelags (15) ausgebildet sind.

6. Verfahren nach einem der Ansprüche 1 bis 5, dadurch gekennzeichnet, daß bei einem kegelförmigen Sinter-Reibbelag (15) die Ausformungen als axiale Rillen (60) ausgebildet sind.

Fig. 1

Fig. 2

Fig. 3

Fig. 4

Fig. 5

Fig. 6

0 267 561

Europäisches
Patentamt

# EUROPÄISCHER RECHERCHENBERICHT

Nummer der Anmeldung

EP 87 11 6484

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 027 979 (POCOCK) <br> * Insgesamt * | 1,2,5 | F 16 D 23/04 <br> F 16 D 69/00 |
| Y | --- | 3,4,6 | |
| D,Y | DE-A-2 261 803 (UNION CARBIDE) <br> * Insgesamt * <br> --- | 3,4,6 | |
| X | US-A-3 139 671 (HERRON) <br> * Insgesamt * | 1,5 | |
| Y | --- | 2,4,6 | |
| D,Y | FR-A- 608 876 (DESROZIERS) <br> * Insgesamt * | 2,4,6 | |
| A | --- | 3 | |
| X | GB-A- 530 904 (STEVENS) <br> * insgesamt * | 1,2 | |
| Y | --- | 3,5,6 | |
| D,Y | DE-U-7 133 858 (TEXTAR) <br> * Insgesamt * <br> --- | 3,5 | |
| Y | DE-A-3 015 765 (BECHTLOFF) <br> * Insgesamt * <br> --- | 6 | RECHERCHIERTE SACHGEBIETE (Int. Cl.4) <br><br> F 16 D 23/00 <br> F 16 D 69/00 |
| X | DE-B-1 220 212 (BENDIX CORPORATION) <br> * insgesamt * <br> --- | 1,5 | |
| D,A | DE-C-3 417 813 (SINTERSTAHL) <br> --- | | |
| D,A | DE-C-2 744 994 (BORG WARNER) <br> --- | | |
| D,A | DE-A-3 122 522 (VOJACEK) <br> --- <br> -/- | | |

Der vorliegende Recherchenbericht wurde für alle Patentansprüche erstellt

| Recherchenort | Abschlußdatum der Recherche | Prüfer |
|---|---|---|
| DEN HAAG | 25-01-1988 | BALDWIN D.R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 515 512 (B.M.W.)<br>--- | | |
| D,A | FR-A-2 232 703 (AUTOMOTIVE PRODUCTS)<br>--- | | |
| D,A | DE-A-3 119 126 (CARPANO & PONS)<br>--- | | |
| D,A | DE-B-2 713 096 (TOYO KOGYO)<br>----- | | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| DEN HAAG | 25-01-1988 | BALDWIN D.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument